# EUROPEAN PATENT APPLICATION

(11) **EP 1 585 086 A1**
(43) Date of publication of application: **12.10.2005**
(21) Application number: 04380079.6
(22) Date of filing: 06.04.2004
(51) Int. Cl.: G09B 7/02, G06F 17/22

(54) **Systems and method for the design and delivery of tests based on semantic annotations**

(71) Applicant: Universidad Autonoma de Madrid, 28049 Madrid (ES)
(72) Inventor: Moriyon Salomon, Roberto, 28220 Majadahonda (ES); Saiz Lopez, Francisco, 28925 Alcorcon (Madrid) (ES)
(74) Representative: Elzaburu Marquez, Alberto

(57) **Abstract**

A computer based testing system and method for the design and delivery of computerized tests such a tests for the selection of parts of a document, tests based on documents that include alternatives to some parts of them, tests that ask students to detect parts of the document that have single alternatives, tests that ask students to modify the contents of the document in order to substitute parts by the corresponding correct part, tests that ask students to assign different semantic annotations to parts of documents that are shown to them or tests that ask students to reorder parts of documents. These tests give users feedback about their work.

## Description

### BACKGROUND OF THE INVENTION

For many years, tests have been used as a means to allow students to determine their degree of understanding of the subjects they study and to help teachers and organizations to assess the abilities and knowledge of people. In the last decades, the creation of tests and their resolution has been automated to a great extent thanks to the use of computers.

There are many products in the market that allow users to create and deliver computerized tests, such as Questionmark Perception, CompassLearning Odyssey Manager, Lectora by Trivantis, WebCT, Riverdeep Learning Management System and Learnframe Pinnacle. Some of them, such as Questionmark Perception, are special programs for computerized tests, while some others such as WebCT are intended to cover a wider range of training activities, including assessment. Moreover, there are research journals specialized in computer based assessment, such as the Journal of Educational Measurement, and periodically surveys about this subject appear in them, such as the paper by April L. Zenisky and Stephen G. Sireci titled Technological Innovations in Large-Scale Assessment, published in Applied Measurement in Education, 15(4), pp. 337-362, in 2002. This paper gives a description of the types of tests that are used and the main advantages they have.

Most products for creation and delivery of computerized tests are variants of a few simple types of tests, namely multiple choice tests, multiple response tests, drag and drop tests, fill in blanks tests, hotspot localization tests, and matching tests. All of them are characterized by the inclusion of a relatively small amount of items that have to be marked, related or moved. There are also some other types of tests where the information is not itemized, such as tests based on the construction of a sketch of a figure by the student, or on the specification of the steps that allow the resolution of a problem. Tests based on free-text entry are also worthy of mention, although their grading by a computer is not possible in general. But there is no system that provides the possibility to ask questions to students that are based on deep conceptual aspects of the subject they are learning and at the same time the answer is integrated in an exposition of those aspects.

The degree of interactivity of the existing computerized tests is also very limited. The highest interactivity consists in the possibility on the part of the student to move some predefined objects on the screen of the computer, such as images, words or paragraphs, and the possibility to get some feedback such as showing the right choice or movement the student should have made. But there is a need for tests that are at the same time programs with high interactivity, both from the point of view of the ways they allow students to indicate their answers and from the point of view of the complexity of the feedback given by the system to the student.

On the other hand, in the last years there has been a big effort of standardization of applications for distance education. The IMS standard includes a section on Question and Test Interoperability, www.imsglobal.org/question, which includes different types of tests. Besides the well known types of tests cited above and many variants of them, the standard considers tests for the selection of parts of a text. This type of test is more flexible than the usual ones from the conceptual point of view, since students have to analyze very carefully the ideas included in the text where they have to select some information. However, the degree of interactivity considered by the IMS standard for these tests is very limited, since it only takes into account the positions of the areas to be selected by the student.

The Educational Testing Service, www.ets.org, from Princeton, New Jersey, USA, is a leading institution in the field of distance assessment. It has more than 2,500 employees, of which more than 250 are researchers in computerized assessment, it administers more than 12 million tests every year worldwide, and it has more than 15 USA patents related to computerized assessment. Patents WO9409466, US5827070, and EP0664041 include a test development system and a test delivery system. The items of tests developed with the development system include blocks of stimulus material that are demarcated by inserting custom codes into them. This allows the blocks to be highlightable upon presentation to the examinees, and to be selectable by the examinees. As in the case of the tests mentioned above considered in the IMS standard, the degree of interactivity of these tests is very limited, since they only consider linear blocks and they are able to distinguish just one kind of information. Systems that are able to associate more complex information to blocks contained in test items and are able to have a richer interaction with the user on the basis of this information are needed in order to achieve a deeper contribution of the use of computers to the learning process.

### SUMMARY OF THE INVENTION

The present invention fulfils the above-described needs by providing methods and systems that allow the design and delivery of new types of computerized tests, which can be created without the need of a specialized knowledge of any computer programming language.

The types of tests that can be designed and delivered with the present invention include the following ones:
- Tests for the selection of parts of a document
- Tests based on documents that include alternatives to some parts of them. For example, the alternatives can consist of correct and incorrect versions of some parts of the documents, or different versions or explanations of the same fact. These tests show students one of the alternatives for each part. For example, they show the incorrect version of each part that has a correct and an incorrect one. These tests can ask students to accomplish the following tasks:
   ■ These tests can ask students to detect parts of the document that have single alternatives, such as incorrect parts of a text that is shown to them.
   ■ In case a part of the document has two or more alternatives, once the previous step is accomplished, these tests can also show students a list that includes them together with the original version and ask students to choose one of them according to some criteria, such as choosing the most convincing explanation of a given fact.
   ■ These tests can also ask students to modify the contents of the document in order to substitute parts of it which have alternatives by the corresponding original version. For example, they can ask students to correct the parts of the document that are incorrect.
   ■ Finally, in each of the above cases, these tests can give students feedback about their work, including the possibility to see the alternatives that correspond to each part of the document. Examples of this behaviour are tests that show students the correct versions of incorrect statements included in them, and tests that show students the different explanations for each fact together with the name of the persons who gave them for the first time.
- Tests that ask students to assign different semantic annotations to parts of documents that are shown to them, such as tests for the syntactical analysis of a text. The actions of the student in this type of tests can have different goals. Students can be asked to relate parts of the test with others, for example determining which persons mentioned in the text have collaborated with others. They can also be asked to associate parts of the document to an item, such as a figure that can be in the same document or in another one. Tests that ask for the determination of parts of documents that describe the cause for the effects described somewhere else also belong to this case. Students can also be asked to build a semantic hierarchy, such as a deep syntactical analysis that includes the analysis of subordinate clauses, or the description of a complex mechanism in terms of simpler ones that are themselves decomposed into smaller parts. Tests in this category can allow students to define their own semantic annotations, which are not predetermined. An example of this is a test that asks for the classification of objects in terms of a date that is associated to them.
- Tests that ask students to reorder parts of documents, such as paragraphs, figures, enumerations, etc. The reordering can be specified explicitly or by means of criteria based on an attribute of some semantic annotation associated to each item, such as cost.

The present invention also provides methods of computerized design of the types of tests described above, comprising the steps of editing or importing an electronic document, and adding to it semantic annotations associated to different parts of the document.

### BRIEF DESCRIPTION OF THE DRAWINGS

The present invention will be better understood, and its objects and advantages will become apparent by reference to the following detailed description of the invention when taken in conjunction with the following drawings.
FIG. 1 shows a scheme of a UML class diagram for the representation of documents with semantic annotations.
FIG. 2 shows a step during the creation of alternative parts in a test.
FIG. 3 shows a step during the modification of an alternative part in a test.
FIG. 4 shows a step while a student unmarks a part of a test as being an alternative.
FIG. 5 shows a step while a student grades the resolution of a test based on the detection of parts of a document with alternatives.
FIG. 6 shows the answers from a student to a test based on the detection of parts of a document with alternatives.
FIG. 7 shows the alternative parts of a test based on the detection of parts of a document with alternatives.
FIG. 8 shows the original parts of a test based on the detection of parts of a document with alternatives.
FIG. 9 shows the selection of an original part of a test based on the detection of parts of a document with multiple alternatives.
FIG. 10 shows a step while a student is exploring the versions that correspond to a specific part after grading the resolution of a test based on the detection of parts of a document with multiple alternatives.
FIG. 11 shows the design of tests for the association of different semantic annotations to parts of documents, while a designer is modifying one of the parts.
FIG. 12 shows a step while a student is answering a test for the association of different semantic annotations to parts of documents.
FIG. 13 shows a step while a student is grading the resolution of a test for the association of different semantic annotations to parts of documents.

### DETAILED DESCRIPTION

### I. Test design and delivery

Generally speaking this invention provides a computer based testing system comprising a subsystem for designing computerized tests with the features that will be explained below and a subsystem for delivering said test to a plurality of electronical terminals where it will be solved by the test users.

This invention also provides a method for, particularly, designing said computerized test and a computer program for implementing this method.

As a first explanation of the system we will begin by mentioning very briefly several embodiments.

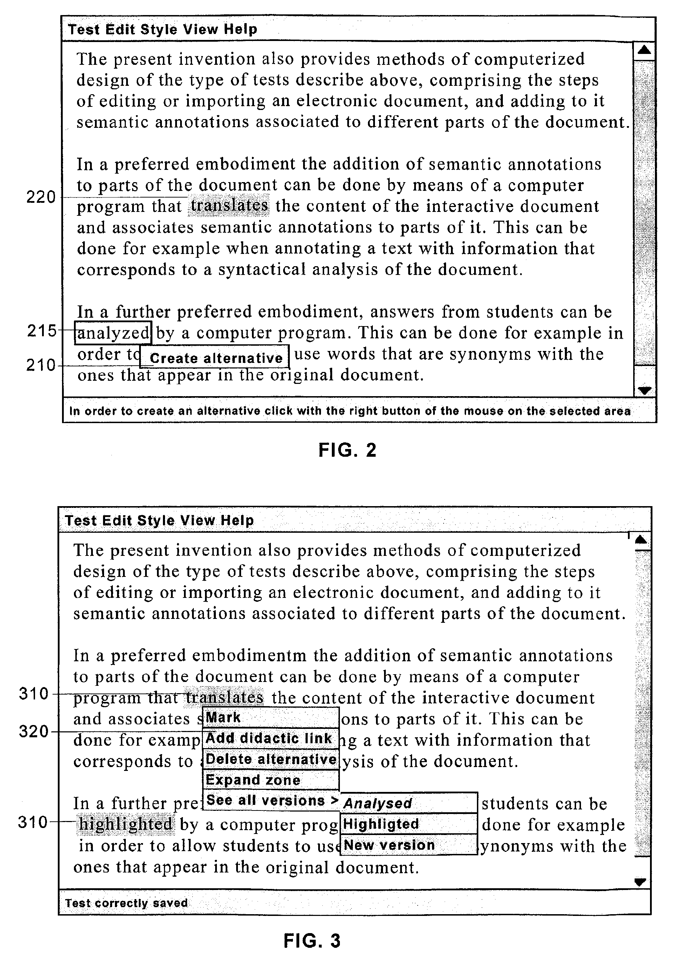

In order to design a test, in a first embodiment, a designer starts a connection from a workstation to a test server through Internet. The design is accomplished by means of an applet with a user interface as in FIGS. 2, 3 and 11. The test can be saved either in the test server or in the workstation.

In a second embodiment, test design is done through an application that runs in the local workstation where the designer is working, where it is saved in a hard disk. The user interface in this case is the same one as in the case of an applet.

In a third embodiment, test design is done through an application that runs in the local workstation where the designer is working, where it is loaded directly from a CD-Rom or DVD-Rom. The user interface in this case is the same one as in the previous cases.

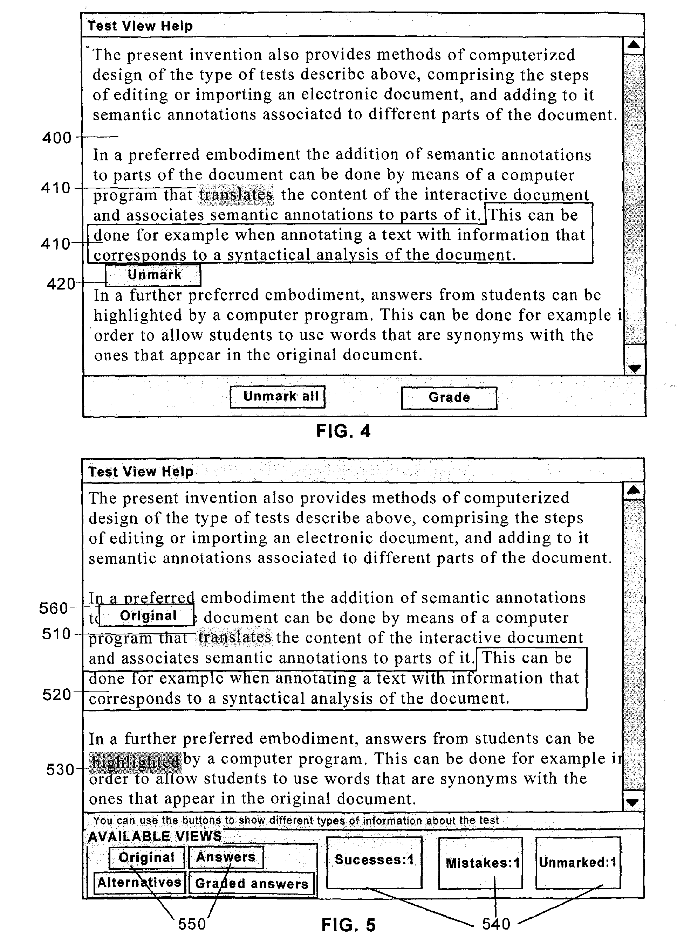

Tests are delivered to students, in a first embodiment, once they are connected from a workstation to a test server through Internet. The test is answered by means of an applet with a user interface as in FIGS. 4, 5, 6, 7, 8, 9, 10, 12 and 13.

In a second embodiment, test delivery is done through an application that runs in the local workstation where the trainee is working, where it is saved in a hard disk. The user interface in this case is the same one as in the case of an applet.

In a third embodiment, test delivery is done through an application that runs in the local workstation where the trainee is working, where it is loaded directly from a CD-Rom or DVD-Rom. The user interface in this case is the same one as in the previous cases.

In a fourth embodiment, test delivery is done by means of a portable device such as a mobile phone or a PDA, which has a screen where documents can be shown and modified, and either the computational capacity to give feedback to the user in order to implement the methods described below, or the capacity to communicate with a server that implements the methods while the corresponding information is shown through the screen.

### II. Fundamental classes

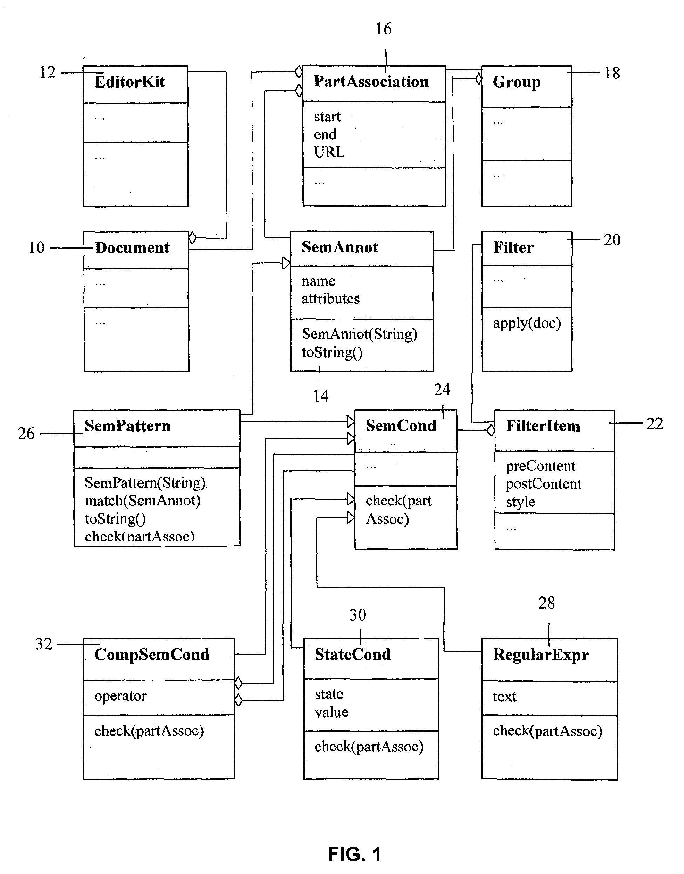

FIG. 1 shows a scheme of a class diagram, designed according to the Unified Modelling Language, UML, for a collection of classes for the representation of documents with semantic annotations.

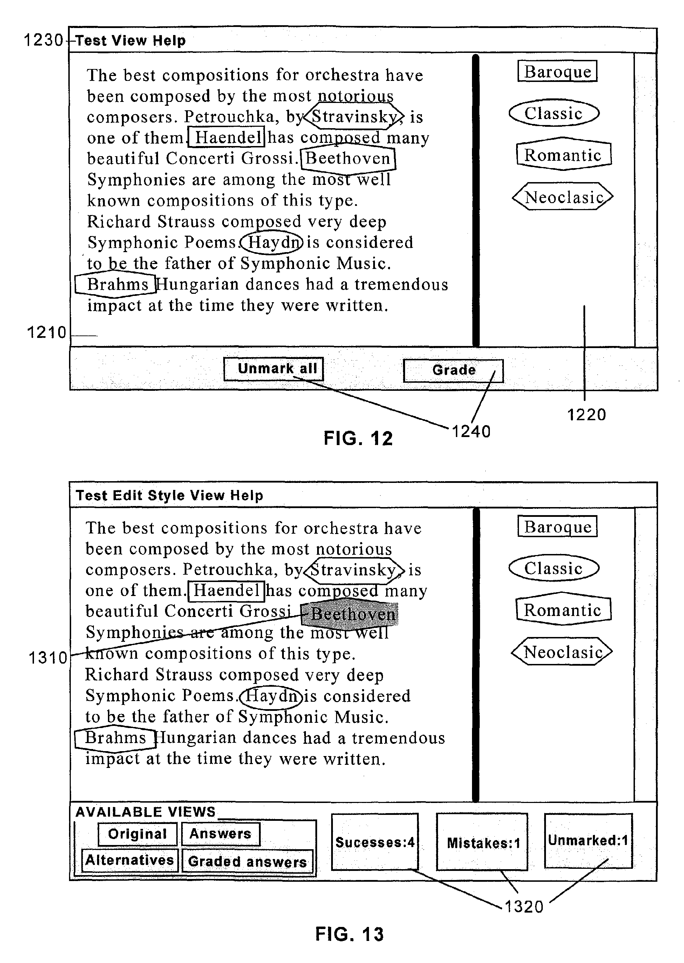

Some of the classes used in the representation of documents with semantic annotations correspond to an editor of text or multimedia documents. Different ways to build such an editor are well known: there are many such editors, and even the corresponding programs for some of them are publicly available, such as mozilla's editor (www.mozilla.org) and Swing's editor, that is part of the Java 2 API (java.sun.com). Component 1210 in FIG. 12 is a document editor. FIG. 1 includes a class 10 called Document, and another one 12 called EditorKit, similarly to Swing's editor.

Besides an editor for multimedia documents, the representation of documents with semantic annotations uses a class 14 that represents semantic annotations, named SemAnnot in FIG. 1. The attributes of this class are a name, which is a character string, and a collection of pairs attribute name-value, the attribute names being character strings and the values being either character strings or semantic annotations. Semantic annotations can be represented by character strings by means of their name followed by a comma separated list of attribute names and values separated by an arrow, the list being surrounded by parenthesis. Hence, the character string "noun(gender → masculine, number → plural)" represents a semantic annotation named "noun" with attributes "gender", with value "masculine", and "number", with value "plural". When no attributes are present, the parenthesis can be omitted. Component 1220 in FIG. 12 shows the textual representations of some semantic annotations without attributes.

In a preferred embodiment, the representation of semantic annotations can be codified directly by means of other data structures, such as strings of characters or even by means of numbers.

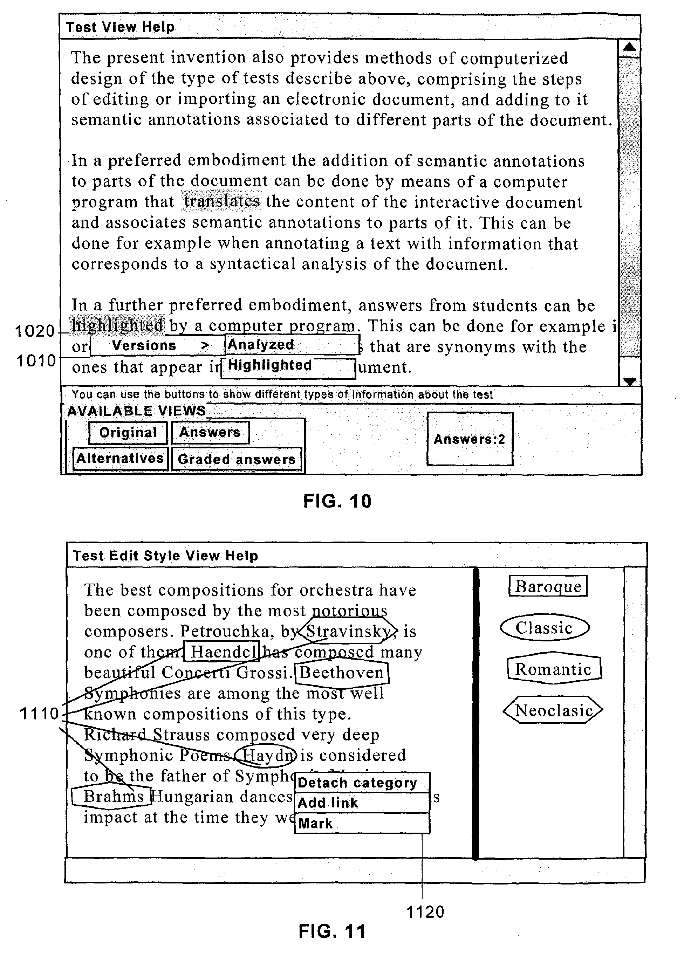

Besides an editor of multimedia documents and a class for semantic annotations, the representation of documents with semantic annotations uses another class 16 that represents the association of semantic annotations to parts of documents, named PartAssociation in FIG. 1. Parts 1110 in FIG. 11 are associated to the semantic annotation in the right that is highlighted with the same shape. The class that represents the association of semantic annotations to parts of documents can be defined by using attributes that represent the following information: An attribute represents a reference to the starting position of the part within the document. Another attribute represents a reference to the end position of the part within the document. The semantic annotation that corresponds to the part is represented by another attribute. A URL that gives access to a corresponding explanation is also represented by an attribute. The value assigned to the part when grading the test is kept in another attribute. Finally, there are four attributes that indicate when a selection of part of the document by the student who is solving the test is considered to refer to the part under consideration. These attributes are references to the starting and end positions of the smallest and largest parts that are admitted to refer to it, so that any selection of a part that is between them is also admitted.

Besides the classes mentioned above, the representation of documents with semantic annotations uses another class 18 that represents groups of parts of documents that are associated to semantic annotations, which can have also associated semantic annotations. A typical example of this is a group formed by an alternative version of part of the document together with the corresponding original version. Such a group is formed by two parts of the document, one associated to the semantic annotation "Original", and the other one to the semantic annotation "Alternative".

Besides the classes mentioned above, the representation of documents with semantic annotations uses another class in order to display the documents in different ways at different moments. This class 20 represents filters that allow parts of documents to be hidden or to be highlighted in a way that depends on their associated semantic annotations. Filters consist of an ordered set of filter items 22. Each filter item is formed by a semantic acceptance condition 24, some optional content to be inserted before corresponding parts of documents, some other optional content to be inserted after them, and a presentation style (a list of specifications of background colour, frame, and character attributes) to be applied to corresponding parts of documents.

Semantic acceptance conditions 24 can be semantic patterns 26, regular expressions 28, state conditions 30 or composed acceptance conditions 32. Semantic patterns 26 are syntactic annotations some of whose attributes can have no value. A semantic pattern matches another semantic annotation if the attributes of the pattern that have a value that is a string are equal to the corresponding ones of the annotation, the ones that have a value that is a semantic pattern match the corresponding ones of the annotation, and the ones without value are defined in the annotation. Semantic patterns can be denoted by means of character strings, such as semantic annotations, using dots ("...") to denote inexistent values or an arbitrary list of attributes. State conditions 30 impose a value on the state of the system when the condition is tested (see paragraph [10720] for an explanation of said states). Composed acceptance conditions 32 are formed from other acceptance conditions by means of conjunction, disjunction and part comparison (equal, contained, contains, disjoint, overlaps), or by negation of a semantic pattern or state condition. The truth value of an acceptance condition on a part is defined as follows: if the condition is a semantic pattern, it is true if the part is associated to a semantic annotation that matches the pattern. If it is a regular expression, it is true if it matches the contents of the regular expression. If it is the negation of a semantic pattern, it is true if the part is not associated to any semantic annotation that matches the semantic pattern. Finally, if it is the conjunction, disjunction or part comparison of other conditions, it is the conjunction, disjunction or part comparison of their truth values.

For example, a filter can map the semantic annotation "Original" to the empty set and the semantic annotation "Alternative" to another set that contains an ordered set with the style attribute "yellow background". Pairs that are part of filters can be represented by means of character strings by means of the concatenation of the previous contents, followed by the representation of the corresponding semantic annotation as a string using the style described by the pair and by the contents to be inserted afterwards. In case the list of styles is empty, the symbol ⌀ can be used preceding the representation of the semantic annotation. A markup language such as HTML can be used for the representation. For example, the pairs mentioned above can be represented by "ØCorrect" and "<span style="background-color: rgb(255, 255, 0);">Incorrect</span>" respectively.

Filters can be applied to documents. The application of the filter given as an example in the previous paragraph hides all parts of the document with semantic annotation "Original" and shows the ones with semantic annotation "Alternative" with a yellow background. In general, filter application is done by means of a loop on the pairs that form the filter; for each pair, if the corresponding set is empty, the parts of the document associated to semantic annotations that match its semantic pattern are omitted; otherwise, the corresponding pieces of document are inserted before and after each part of the document whose associated semantic annotation matches the semantic pattern of the pair, and the format of these parts is modified according to the presentation style specified in the second part of the pair.

### III. Common aspects of the systems

We will now explain the systems and methods according to the present invention through the main features of the user functionality and the program structure of several types of computerized test. Firstly we will describe the common aspects for all of them. Secondly we will refer to each particular type. For the sake of clarity we will use from now on the word "test" as synonymous of "computerized test according to the methods and systems of the present invention".

The systems for the design and delivery of tests based on semantic annotations can be in different states at each moment. For example, while a student is solving a test the system for test delivery can be in "Resolution" state and "Grading" state among others. Sometimes a test will be said to be in a specific state during its design or resolution, the meaning of this being that the corresponding design or delivery system is in that state; this terminology will simplify the description of the system.

During their design, tests based on semantic annotations can be solved by the designer in order to check the design and to correct it. Moreover, in some cases a document can be used to pose different types of tests. For example, a document that includes alternatives can give rise to a test for the detection of single or multiple alternatives and to a test for the modification of the document. In this case, during the global design process the system can be in states such as "Design" and "Modification emulation", and within the last one, in emulation substates such as "Grading". In general, while being designed, tests based on semantic annotations can be in a special state, named "Design", in which the design of the corresponding documents is accomplished; they can also be in one or more emulation states, in which the designer can check the resolution of the different types of tests that can be posed with the underlying document. Moreover, each emulation state has substates that correspond to the states of the delivery system being emulated. This behaviour can be achieved by means of a stack of states, where current substates are kept at the top of the stack and, when an emulation ends, the last substate is popped out from the stack and the design system goes back to the "Design" state.

The design and use of tests based on semantic annotations is accomplished by means of two corresponding computer program based on the classes described in the previous section, the corresponding set of states, and a user interface. These programs can also use a data base as explained below. The aspects of the user interfaces for the design and delivery of tests based on semantic annotations that are common to all of them are described in the next paragraphs. The specific aspects of each user interface are described in the next sections. These descriptions are done in terms of the components that form the user interface and the response of the test to different user inputs.

In a preferred embodiment, a system for the design or delivery of tests based on semantic annotations will use a database in order to save and get the semantic information associated to tests in a persistent way and to be able to access it. In such embodiment, the documents that underly the tests are saved in a standard format like HTML without any extra semantic information. The data that corresponds to objects of all the classes described in the previous sections except EditorKit, Document and StateCond are saved in corresponding tables in the database, as well as the relationships between them shown in FIG. 1. In order to do this, attributes that are object identifiers are added to the classes, and save() and get(id) methods are added to each class, that access the database. Class Document also needs methods getAnnotations() and setAnnotations(SemAnnot) that allow its objects to get the associated semantic annotations and associate annotations to documents. Similarly, all remaining classes need methods that allow their objects to get other objects that are related to the first ones according to the relations defined in the previous section and set relations among them.

In an alternative embodiment, a system for the design or delivery of tests based on semantic annotations will save all the information that corresponds to each test in a single file that will include both pure contents and semantic information. This can be achieved by using an XML based language that has specific labels for the semantic information, or by several other mechanisms that are obvious variations of this one, like adding to a standard document representation of the contents of the test an ascii representation of the corresponding data that is stored in the database in the description of the previous embodiment, or using an extension of a markup language like HTML that adds this information in the form of commentaries or any other equivalent form.

In a preferred embodiment, test design is accomplished in a distributed client-server environment as described in paragraph [5000], tests are saved in documents and databases in the server as described in paragraph [10760], documents that are part of tests are in the client workstation where the design applet is running during the design, and the calls for operations that need access to the classes described in the previous section send requests to the server for the information they need at each instant and for its modification.

In a preferred embodiment, test delivery is accomplished in a distributed client-server environment as described in paragraph [5000], during their resolution tests are loaded from documents in the server into the client workstation where the resolution applet is running, and the calls for operations that act on the classes described in the previous section send requests to the server for the information they need at each instant.

In a preferred embodiment, the addition of semantic annotations to parts of the document can be done by means of a computer program that analyzes the contents of the interactive document and associates semantic annotations to parts of it. This can be done for example when annotating a text with information that corresponds to a syntactical analysis of the document.

In a further preferred embodiment, answers from students can be analyzed by a computer program. This can be done for example in order to allow students to use words that are synonyms with the ones that appear in the original document.

FIG. 12 shows most of the main types of components used for the design and use of tests based on semantic annotations according to the methods and systems of the present invention: Component 1210 is a document editor. Document editors are used to modify the contents and appearance of the document associated to a test, and to perform actions that affect the relation between parts of documents and semantic annotations. Component 1220 is a filter editor, which allows also the edition of semantic annotations. Filter and semantic annotation editors use the representation of the objects from these classes as text with style and character strings respectively in order to allow their modification. Components 1230 are menus and components 1240 are buttons. Other components are shown in FIG. 5: Component 560 is a contextual menu, and components 540 are labels.

For each state, a specific configuration of document editors, filter editors, semantic annotation editors, menus, labels, and buttons is included in the user interface of a test based on semantic annotations according to the methods and systems of the present invention. FIG. 4 shows the components of the user interface used when solving a test for the detection of parts of a document that have single alternatives, when it is in state "Resolution".

For each state and each editing component that is present when the test is in it, there is an associated filter that is enabled initially when passing to that state. For example, when grading a test, a grading filter highlights the parts of the document editing component, using different colours for the parts of the document where the answer from the student is reflected depending on the correctness of the answer given through each of these parts. The filter also hides unnecessary information.

Clicking events on menu items and buttons can start the execution of standard editing actions or special actions such as changing the state of the system, associating semantic annotations to parts of a document shown in an editing component, disassociating semantic annotations from parts of a document shown in an editing component, unfiltering a document shown in an editing component and filtering a document shown in an editing component, which can be already filtered (applying one more filter to it).

A test based on semantic annotations must handle the same events an editor of multimedia or text documents does. The actions executed when an event is handled can depend on the verification of a semantic acceptance condition of the type described in paragraph [10500]. For example, when a student is solving a test to detect parts of a document that have alternatives, after selecting a part of a document the part will be marked if it does not intersect any other part that is previously marked. This condition can be expressed by means of a semantic condition as the negation of an intersection.

Standard editing actions, as well as filter application and unfiltering, must update relevant references to positions within documents, and keep the appearance of editing windows consistent with the application of the filters that are enabled at each instant. In some cases standard editing events are ignored, as in case a student is solving a test that asks for the detection of some parts of a document and he types some words. If all events that change the contents of the document are ignored, the edition component is said to be a document browser.

Editing events such as dragging can also give rise to the execution of special document actions which affect specific parts of the document. They can also depend on the state of the system. For example, when the "supr" button of the keyboard is pressed while the selection contains a part that is associated to a semantic annotation, the part must be deleted, and its associations must be cancelled. There are several kinds of special document actions. A special document action can show a contextual menu. It can also follow a link specified in the semantic annotation of the part the event takes place on. It can be a contextual filtering action, which adds a semantic annotation that identifies uniquely the part the event takes place on and applies a filter that acts on that semantic annotation, and hence on that part. It can also add, modify or cancel associations between the part the event takes place on and some semantic annotations. All these actions can also be started from an item of a menu or a button, acting on the part of the document that is selected or a part associated to the place the cursor is at.

### IV. Tests that include parts with alternatives (Design)

### a. User functionality

In order to design tests that include parts with alternatives, designers have to edit or import documents, select parts of them, and specify the corresponding alternatives. The contextual menu 210 shown in FIG. 2 can be used to do this after selecting the desired part of the document. When the mouse is clicked on the contextual menu, the part of the document that is selected disappears, and the user types in the alternative to it, which is highlighted. The highlighted part 220 in FIG. 2 shows an alternative part that has been created in this way.

Once an alternative has been created, it can be modified in several ways. FIG. 3 includes two alternative parts, labelled with number 310. The contextual menu 320, which is available since the cursor is on an alternative, shows the actions that can be executed with respect to this part of the document, which are the following ones: a) The default mark assigned to the part when grading the test can be modified, and the part of the document that is accepted when the student marks the alternative part can be enlarged. b) A link to an explanation related to the alternative can be added. c) The alternative part can be eliminated. In this case, if there are no more alternatives, the original part remains in the document without any semantic annotations associated to it and the group that contains it is also eliminated; otherwise, the first alternative will be shown instead of the one that has been eliminated. d) The part of the document that is accepted when the student marks the alternative part can be enlarged. After this, a part selected by the student will be accepted as correct if it contains the part where the cursor is on and it is contained in the extended acceptance part. e) If the document allows only one alternative to each part, the original part can be shown instead of the alternative one that was shown. Otherwise, if the document allows the existence of more that one alternative to a part, the existing alternatives can be seen in an emerging list, any of them can be selected to appear instead of the one that was shown, and a new one can be created. f) In case a link has been attached. to a part, it can be removed and its target document can be shown. Once the documents are ready, they can be saved.

### b. Semantic annotations and test design program structure

Documents that include parts with alternatives include groups composed by two or more consecutive parts with semantic annotations "Original", "Alternative(order → 1)", "Alternative(order → 2)", etc. The precise meaning of these semantic annotations varies from case to case. A typical case is when the content of original parts is correct and the content of alternative parts is incorrect. The groups included in the document can not overlap.

Tests that include parts with alternatives can be in four different states during their design. When in "Design" state, the design can go on. When in "Single detection emulation" state, the tests behave as when solving a test of detection of single alternative parts. When in "Multiple detection emulation" state, the tests behave as when solving a test of detection and selection of parts with single alternatives. When in "Modification emulation" state, the tests behave as when solving a test for the modification of documents with alternatives. In this section we shall describe the behaviour of the test in "Design" state; its behaviour in each one of the remaining states is identical to the behaviour of the corresponding emulated tests when they are solved, according to the descriptions given in sections V, VI and VII below.

FIG. 2 shows the components included in the user interface of a system for the design of documents that include parts with alternatives when in "Design" state. The component with white background that contains the text is a document editor with additional functionality described below.

The filter that is enabled initially on the document editor when in "Design" state highlights the parts of the document associated to the semantic annotation "Alternative" and hides the ones that are associated to the semantic annotation "Original". Part 220 in FIG. 2 is highlighted, since it represents a part that is associated to the semantic annotation "Alternative", while the part of the document that is in the same group with semantic annotation "Original" does not appear in the editor window.

The contextual menu 210 in FIG. 2 has a semantic acceptance condition: the selection can not overlap any part of the document with an alternative version. The contextual menu 320 in FIG. 3 has another semantic acceptance condition: the cursor must be on a part of the document for which there is an alternative version.

### V. Tests for the detection of parts of a document with single alternatives (Solving)

### a. User functionality

Tests for the detection of parts of documents with single alternatives can be solved by users by selecting the parts of the document they consider to be alternatives to an original version. After this, the answers provided by them are graded, and three different kinds of feedback are given by showing either the original version of the documents or the alternative one, highlighting in this case either the answers or the alternative parts that are included in them.

While solving a test, students must select disjoint parts of the document. The parts 410 in FIG. 4 are in this situation. The contextual menu 420 allows the student to eliminate the association of annotations of this kind to parts of a document. Finally, students can restart their work by clicking on a button, and they can ask for test grading by clicking on another button.

FIG. 5 corresponds to a test being graded. The part 510, which has been selected properly, is highlighted in a fixed colour. Similarly, the part 520 is highlighted in a different colour, since it has been selected erroneously. Finally, the part 530 is highlighted in a third colour, since it should have been selected, but has not. The labels 540 show the number of each kind of parts highlighted on the left, with the corresponding colour. While grading a test, students can ask for three kinds of additional feedback, that allow them to see either the original version of the documents or the alternative one, highlighting in this case either the answers given by them or the alternatives. This can be done by clicking on the buttons 550.

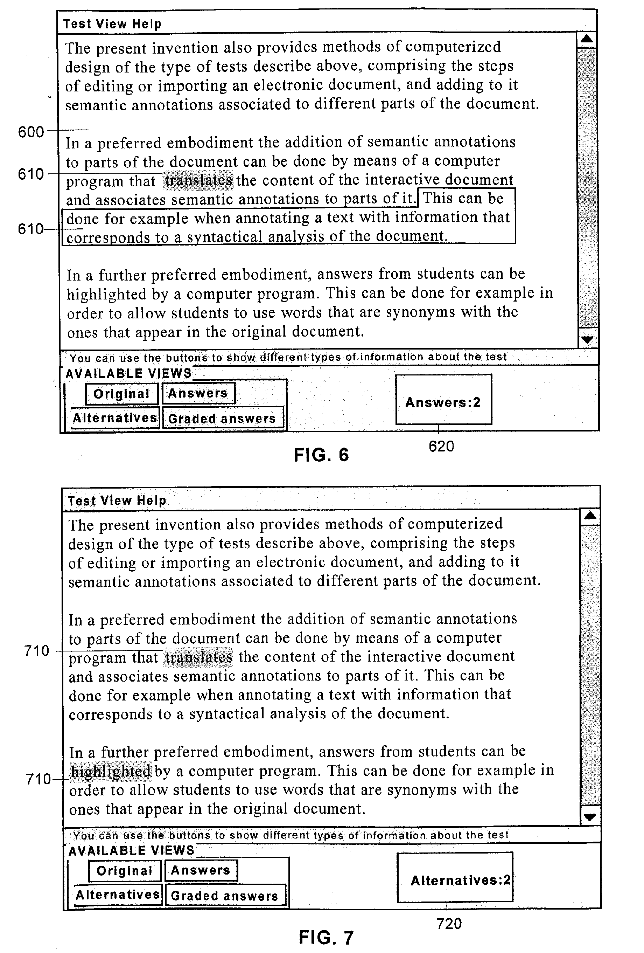

FIG. 6 shows the alternative version of a document with the parts 610 that have been selected by the student highlighted in one colour. The label 620 shows the number of parts that have been selected by the student. Finally, when the system is in this situation, students can also ask for additional feedback by clicking on the corresponding button in the lower part of FIG. 6.

FIG. 7 shows the alternative version of a document. The parts 710, which are all highlighted in the same colour, show the parts of the document where alternatives to the original version appear. The label 720 shows the number of parts with alternatives to the original version. The buttons in the lower part of FIG. 7 play a similar role to the ones in FIGS. 5 and 6.

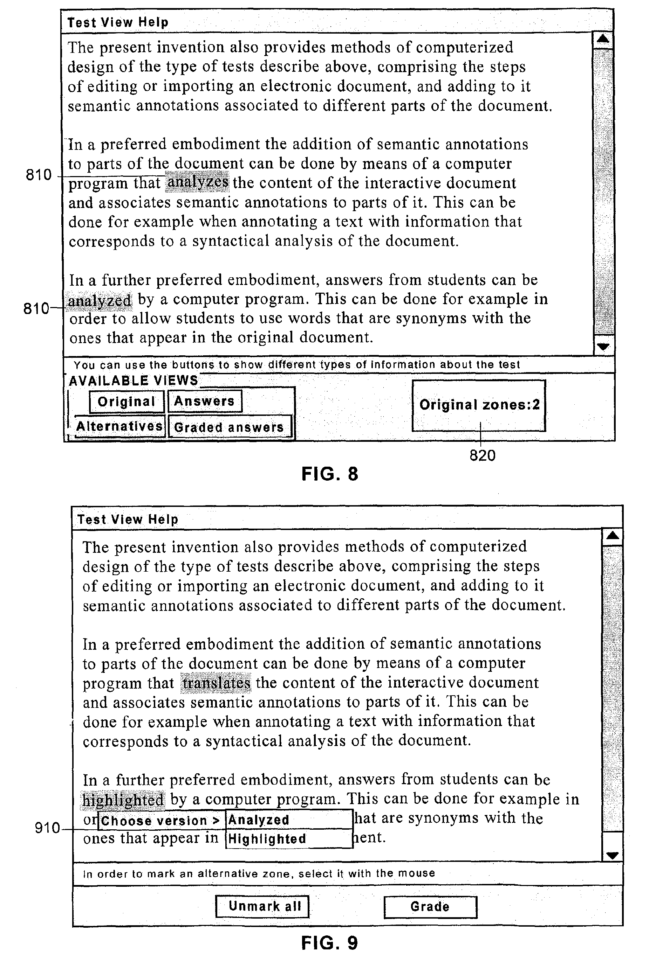

FIG. 8 shows the original version of a document. The parts 800, highlighted in the same colour, show the original version of all parts of the document that have alternatives. The label 820 shows the number of original parts with alternatives that are shown. The buttons in the lower part of FIG. 8 play a similar role to the ones in FIGS. 5, 6 and 7.

When the test is in any of the situations described in paragraphs [12200], [12300], [12400], and [12500], students can bring up contextual menus associated to parts of the document that are highlighted in order to change the kind of information shown about them. For example, the contextual menu 560 in FIG. 5 can be used to see the original version that corresponds to part 510. Similar menus can be brought up attached to parts 510 in FIG. 5, 610 in FIG. 6, and 710 in FIG. 7, while part 810 in FIG. 8 can be changed by its graded alternative version. In general, the choices available to students are the ones described in paragraphs [12200], [12300], [12400], and [12500].

### b. Test solving program structure

A test for the detection of parts of a document with single alternatives passes when used by a student through the states "Resolution", "Grading", "Answers", "Alternative" and "Original". Paragraphs [12100], [12200], [12300], [12400], and [12500] above describe the behaviour of the system when in these states respectively. Paragraph [12550] completes this description for the last four states.

FIG. 4 shows the components included in the user interface when solving a test that include parts with single alternatives, while in "Resolution" state. The component 400 with white background that contains the text is a document browser that allows the selection of document contents and has additional functionality described below.

When in "Resolution" state, the dragging event is associated to a document action that associates the semantic annotation "Student alternative" to the part of the document that is selected. It must satisfy an acceptance condition by which the selected part can not overlap any part with semantic annotation "Student alternative".

The filter that is enabled initially on the document browser when the system is in "Resolution" state highlights the parts of the document with semantic annotation "Student alternative". Parts 410 in FIG. 4 have been associated to the semantic annotation "Student alternative" by means of a dragging event, according to the previous paragraph, and so it is highlighted by the filter described above.

When in "Resolution" state, the semantic acceptance condition that must be satisfied for the availability of the contextual menu 420 in FIG. 4 is that the cursor is in one of the parts of the document associated to the semantic annotation "Student alternative".

FIG. 6 shows the components included in the user interface of a test that include parts with single alternatives, when in "Grading" state. The component 600 with white background that contains the text is a document browser that has additional functionality described below.

The filter that is enabled initially on the document browser when the system is in "Grading" state highlights the parts of the document associated to the semantic annotation "Student alternative" that are contained between a part that matches the semantic pattern "Alternative(...)" and its extended acceptance part. It also highlights in a different colour the parts of the document associated to the semantic annotation "Student alternative" that are not between any part with semantic annotation "alternative" and its extended acceptance part. Finally, it highlights in a third colour the parts of the document associated to the semantic annotation "Alternative" that do not intersect any part that is associated to the semantic annotation "Student alternative". According to this and to the description of FIG. 3 given in paragraph [11600] and the description of FIG. 4 in paragraph [12675], the filter described above highlights part 510 in FIG. 5 in the first colour, part 520 in the second one, and part 530 in the third one.

The components included in the user interface of a system for the delivery of documents that include parts with single alternatives, when in "Answers", "Alternative" and "Original" states, are the same ones as in "Grading" state, described in paragraph [12700].

The semantic actions that correspond to the buttons and contextual menus available in the "Grading", "Answers", "Alternative" and "Original" states are the actions described in paragraph [12550].

The filters that are enabled initially on the document browser when the system is in the "Answers", "Alternative" and "Original" states are described in paragraphs [12300], [12400] and [12500] respectively.

The contextual menus described in paragraph [12550] are available according to semantic acceptance conditions. For example, the contextual menu 560 in FIG. 5 can be brought up only when the cursor is in a part with semantic annotation "Alternative", except in state "Original". The semantic conditions for the availability of the remaining two contextual menus mentioned in paragraph [12550] are similar to the previous one.

### VI. Tests for the detection of parts of a document with multiple alternatives (Solving)

### a. User functionality

Tests for the detection of parts of documents with multiple alternatives can be solved by users by indicating the parts of the underlying documents that show alternatives to the original version, and determining afterwards the original version that corresponds to each of them. After this, the system grades the answers provided, and gives students three different kinds of feedback by showing either the original version of the documents or the alternative one, highlighting in this case either the answers or the alternative parts that are included in them.

While solving a test, students must first select disjoint parts of the document. Then, they must bring up consecutively a contextual menu on each of them that allows them to indicate which are the original versions for all the parts. Contextual menu 910 in FIG. 9 allows a student to do this by choosing one of the versions available on the right. In general, students have to choose an item in a list built by the system that includes the original version of each part, and the remaining alternatives it has. In case one of the parts selected is not an alternative, it is highlighted in a colour that indicates it, and the list is not shown to the student; otherwise, the version chosen is shown instead of the one that appeared before, and it is highlighted in a different colour.

When grading a test, the parts selected by the student and the ones with alternatives are highlighted in the same way described in paragraph [12200] for the case of single alternatives, with the following differences: the first type of parts that are highlighted are those that show the parts of the document that have been selected properly and for which the student has selected the original version; on the other hand, there is a fourth type of parts, which are highlighted in a fourth colour. These parts are the ones that show the parts of the document that have been selected properly and for which the student has selected one of the alternative versions instead of the original one. Analogously to the case of single alternatives, a set of labels show the number of each kind of parts highlighted on the document editor, with the corresponding colour. Also as in the case of single alternatives, while grading a test, students can ask for three different kinds of additional feedback, which allow them to see either the original version of the documents, the answers given to the test or the alternative version shown initially.

When students ask for feedback about their answer, the document is shown, substituting each original version by the corresponding part selected during the resolution, which is highlighted in the same way as during the resolution. A label shows the number of parts that have been selected by the student. Moreover, students can ask for other types of feedback described here, including test grading. This is done by means of appropriate buttons.

When students ask for feedback about the alternatives, the document is shown with the same contents shown during the resolution of the test. The alternative parts of the document are highlighted, and users can click on them and a list of other versions that includes the original one is shown. Contextual menu 1010 in FIG. 10 shows the existing versions for part 1020. A label shows the number of parts with alternatives in the document. As in the previous paragraph, students can ask for other types of feedback described here, including test grading. This is done by means of appropriate buttons.

When students ask for feedback about the original version of the document, the test shows the same contents of the previous paragraph, substituting the alternative parts by the corresponding original ones and highlighting them in a colour that identifies them. A label shows the number of original parts with alternatives that are shown. This is identical to the behaviour described in paragraph [12500].

While grading or reviewing the answers, alternative parts or original parts, students can bring up contextual menus associated to parts of the document that are highlighted and view those parts individually in the form described in paragraphs [13100], [13300], [13400], and [13500], in a similar way to the one described in paragraph [12550].

### b. Test solving program structure

Tests for the detection of parts of a document with multiple alternatives pass when used by a student through the states "Resolution", "Grading", "Answers", "Alternative" and "Original". Paragraphs [13050], [13100], [13300], [13400], and [13500] above describe the behaviour of the system when in these states respectively. Paragraph [13550] completes this description for the last four states.

The components included in the user interface of a system for the delivery of tests that include parts with multiple alternatives are the same ones that correspond to tests whose parts have single alternatives, described in paragraphs [12600], [12700] and [12750].

When in "Resolution" state, the dragging event is associated to a document action that associates the semantic annotation "Student alternative" to the part of the document that is selected. It must satisfy an acceptance condition by which the selected part can not overlap any part with semantic annotation "Student alternative". Moreover, the selection event on the list of alternatives is associated to another document action that associates the semantic annotation "Student original" to the parts selected by the student as being the original versions.

The filter that is enabled initially on the document browser when the system is in "Resolution" state highlights in one colour the parts of the document with semantic annotation "Student alternative" that are not in a group that includes a part with semantic annotation "Student original". In these groups, the filter hides all the remaining parts. When a group includes a part with semantic annotation "Student original", this part is highlighted in a second colour and the remaining ones are hidden. This gives rise to the behaviour described in paragraph [13050].

The semantic acceptance condition that must be satisfied for the availability of the contextual menu that allows the choice of the original part when in "Resolution" state is that the cursor is in one of the parts of the document associated to the semantic annotation "Student alternative". This is illustrated in FIG.9, where contextual menu 910 is attached to the highlighted part that appears immediately above it.

The components included in the user interface of a system for the delivery of documents that include parts with multiple alternatives, when in "Grading", "Answers", "Alternative" and "Original" states, are the same ones as in paragraphs [12700] and [12750].

The filters that are enabled initially on the document editor when the system is in the "Grading", "Answers", "Alternative" and "Original" states, are the same ones as in paragraphs [12725] and [12790].

The semantic actions that correspond to the buttons and contextual menus available in the "Grading", "Answers", "Alternative" and "Original" states are similar to the ones described in paragraph [12775]. The contextual menus described in paragraph [13550] are available according to semantic acceptance conditions similar to the one described with detail in paragraph [12800].

### VII Tests that ask students to modify the contents of those parts of a document that have alternatives (Solving)

### a. User functionality

Tests for the modification of parts of documents with single alternatives can be solved by users by editing the document. After the document is edited, the system grades the answers provided, and gives students three different kinds of feedback by showing either the original version of the documents, the alternative one or the answer of the student. In the first case, the system highlights the parts of the document that have alternatives, in the second case it highlights the alternative parts, and in the third case it highlights the parts of the document whose contents have been changed.

When solving tests, students must edit the corresponding documents, making the changes they consider necessary in order to accommodate the document to the questions in the test. The parts of the document that have been modified appear substituting the corresponding ones that appeared at the beginning. The parts that appeared in the statement that have been modified by students are hidden, and the alternatives created by them are highlighted. A contextual menu allows students to undo the changes made on any of these parts of documents. Finally, students can restart their work by clicking on a button, and they can grade the test they have answered by clicking on another button.

When grading tests, the system compares the changes made by students with the ones they should have made. Parts that are changed in the way expected are highlighted. Parts that are changed but should not have been changed are highlighted in a different colour. Parts that are changed in a way different than expected are highlighted in a third colour. Parts that should have been changed but have not are highlighted in a fourth colour. Paragraphs [14800] and [14900] give a detailed description of the way these conditions are tested.

Once tests are graded, the system behaves in the way described previously in paragraphs [12300], [12400], [12500], and [12550], where the alternative versions mentioned refer to the ones typed by the student.

### b. Test solving program structure

A test for the modification of parts of a document with alternatives passes when used by a student through the states "Resolution", "Grading", "Answers", "Alternative" and "Original". Paragraphs [14100], [14200], and [14300] above describe the behaviour of the system when in these states respectively.

The components of a system that delivers tests for the modification of parts are the same ones described in paragraphs [12600], [12700] and [12750], except for the fact that in "Resolution" state the user interface contains a document editor with full functionality instead of a document browser.

When the resolution of a test starts, in "Resolution" state, two copies of the original document are used. One of them, which includes all the parts and alternatives that exist at the beginning, is hidden and the edition actions of the student do not affect it. The second copy is displayed in the document editor, and it has initially the same contents as the first document after applying a filter to it that hides the parts with semantic annotation "Original". It contains no parts with semantic annotations. As a student edits this document, a set of non adjacent parts with the semantic annotation "Student modification" is created and updated. Each of them contains a part of adjacent modified text. Each of these parts is in a group that includes another part with semantic annotation "Initial student version". Each one contains the corresponding part of the text that appeared at the beginning.

The filter that is enabled initially on the document editor when the system is in "Resolution" state highlights the parts of the document with semantic annotation "Student modification", and hides the ones with semantic annotation "Initial student version".

When the system passes to "Grading" state, the following special action is executed: for each part with "Student modification" semantic annotation in the second document, a sequence of adjacent groups in the first document that corresponds to it or to part of it is determined. For each of these sequences, the following is done: If there is no group in the first document that corresponds to the part of the modified part, this part is associated to the semantic annotation "Student incorrect modification". For each of these groups, starting from the ones that are closer to the beginning of the document, the text that appears in the part with semantic annotation "Original" is searched in the corresponding part of the second document. In case the text is not found, the group is discarded. In case the text it is found, the part of the second document in which it is contained is split into three parts (the previous part, the part that has been found and the part that follows it). The first one is associated to the semantic annotation "Student incorrect modification", the second one is associated to the semantic annotation "Student correct modification", and the third one is associated to the semantic annotation "Student modification", and it is considered next in order to continue the procedure described here, substituting the part that has been split, unless there are no more parts in the sequence, in which case it is associated to the semantic annotation "Student incorrect modification". After this, the group under consideration in the first document is discarded and the next group is considered, unless there are no more groups in the sequence, in which case the part under consideration with semantic annotation "Student modification" is associated to the semantic annotation "Student incorrect modification". Finally, the parts of the second document that correspond to alternative parts of the first one are associated to the semantic annotation "Unmodified".

The filter that is enabled initially on the document editor when in "Grading" state highlights in one colour the parts shown in the document editor that are associated to the semantic annotation "Student correct modification". It also highlights in a different colour the parts that are associated to the semantic annotation "Student incorrect modification", and it highlights in a third colour the parts with semantic annotation "Unmodified".

The contextual menus available in the "Grading", "Answers", "Alternative" and "Original" states are similar to the ones described in paragraph [12800]. For example, when the cursor is in a part of the document shown in the document editor that has semantic annotation "Unmodified" or "Student incorrect modification", a contextual menu is available to show the original versions of the parts next to them. In the first case, the corresponding original version is the part of the corresponding group in the first document with semantic annotation "Original". In the second case, it is the concatenation of the "Original" parts of the groups in the first document that correspond to the part under consideration.

The acceptance conditions that correspond to the buttons and contextual menus available in the "Grading", "Answers", "Alternative" and "Original" states are similar to the ones described in paragraph [12550]. In this case the conditions described in this paragraph must be restated in terms of the two documents used by the system as follows: a) Parts of the second document with semantic annotation "Student correct modification" are considered to have an alternative and show its original version. The corresponding alternative is the part of the corresponding group in the first document with semantic annotation "Alternative". b) Parts of the second document with semantic annotation "Unmodified" are considered to show the alternative to an original version. The corresponding original version is the part of the corresponding group in the first document with semantic annotation "Original". c) Finally, all parts of the second document that have associated semantic annotations are considered to have been selected during the resolution stage. They are considered to be their own corresponding alternative version.

The filters that are enabled initially on the document editor when the system is in the "Answers", "Alternative" and "Original" states, are similar to the ones of paragraphs [12725] and [12790].

### VIII. Tests that ask students to assign different semantic annotations to parts of documents (Design)

### a. User functionality

Tests for the association of different semantic annotations to parts of documents can be designed by editing or importing documents and associating semantic annotations to parts of them by specifying semantic annotations and selecting associated parts of the documents. Highlighted parts 1110 in FIG. 11 have been associated to the semantic annotations represented with the same background shape (simulating a colour) on the right.

The semantic annotations attached to different parts of documents can have corresponding highlighting styles, which are specified by means of a filter. The right panel in FIG. 11 specifies a filter by which parts associated to the "Baroque" semantic annotation are highlighted in one colour, while the ones associated to the "Classic" semantic annotation are highlighted in a different colour, the ones associated to the "Romantic" semantic annotation are highlighted in a third colour, and the ones associated to the "Neoclassic" semantic annotation are highlighted in a fourth colour. The appearance of the left panel corresponds to the application of the filter specified in the right one.

The following contextual menus are available when the cursor is on a part associated to a semantic annotation: a) Designers can disassociate semantic annotations from parts. b) A link to an explanation related to each association can also be added. c) In case a link has been attached to a part, it can be removed and its target document can be shown. d) The default value assigned to each association when grading the test can be modified, and the part of the document that is accepted when the student marks the association to a semantic annotation can be enlarged. Contextual menu 1120 in FIG. 11 is attached to the part that is highlighted on top of it. Once the documents are ready, they can be saved.

### b. Test design program structure

Tests for the association of different semantic annotations to parts of documents can be in two different states during their design. When in "Design" state, the design can go on. When in "Single detection emulation" state, the tests behave as when they are solved. In this section we shall describe the behaviour of the system in "Design" state; its behaviour in "Single detection emulation" state is identical to the behaviour of the corresponding emulated system for test delivery, according to the descriptions given below.

FIG. 11 shows the components included in the user interface of a system for the design of tests for the association of different semantic annotations to parts of documents when in "Design" state. The panel on the left is a document editor with additional functionality described below. The panel on the right is a filter editor with additional functionality described below.

The filter that is enabled initially on the document editor when in "Design" state highlights each part of the document that is associated to a semantic annotation that appears in the right pannel. In case the part is associated to a unique semantic annotation from the right panel, the part is highlighted in the colour that corresponds to the associated semantic annotation. The intersection of two parts that are associated to semantic annotations that appear in the right pannel is highlighted in a fixed colour.

The semantic actions that correspond to the contextual menus available in the "Design" state are the actions described in paragraph [16075].

The contextual menus described in paragraph [16075] are available according to the semantic acceptance condition that asks the cursor to be in a part that is associated to a semantic annotation.

### IX. Tests that ask students to assign different semantic annotations to parts of documents (Solving)

### a. User functionality

Tests for the assignment of semantic annotations to parts of documents can be solved by users by selecting or specifying semantic annotations and selecting associated parts of the documents.

While solving a test, students must select consecutively a part of the document shown in the browsing component on the left of FIG. 12 and an item from the filter specification component located on the right in order to associate semantic annotations to parts of a document, in a way similar to the design of tests for the assignment of semantic annotations. Optionally, the tests can allow the user to add new semantic annotations during the resolution of the test, which that can be associated to parts of the document. Finally, students can restart their work by clicking on a button, and they can ask for test grading by clicking on another button.

FIG. 13 corresponds to a test being graded. Part 1310 is shadowed, since it has been associated to an erroneous semantic annotation. The remaining highlighted parts in the left panel are not shadowed. They have been associated properly to corresponding semantic annotations. The labels 1320 in the right side of the figure show the number of each kind of parts framed on the left, with the corresponding colour. While grading a test, students can ask for two kinds of additional feedback, that allow them to see either the correct association of semantic annotations to parts of the document or the one specified by them. This can be done by clicking on buttons.

When the test is in any of the three situations described in paragraph [17100], students can bring up contextual menus associated to parts of the document that are highlighted. These contextual menus allow students to ask the system to show a different kind of information about the highlighted part the menu is attached to. The choices available to students are the ones described in that paragraph: In the case of parts that are associated to a semantic annotation and are highlighted according to an association specified by the student, he can ask them to be highlighted according to the original semantic annotation. Conversely, in the case of parts that have been associated by the student to a semantic annotation and are highlighted according to an original association, the student can ask them to be highlighted according to the association specified by him. Finally, in the case of parts that have been associated to semantic annotations by the student, he can ask for their grading, and they are then highlighted in three different colours with the criteria described in paragraph [17200].

### b. Test solving program structure

During its resolution, a test for the assignment of semantic annotations to parts of documents passes through the states "Resolution", "Grading", "Answers", and "Original". Paragraphs [16100], [16200], and [16300] above describe the behaviour of the test when in these states respectively.

FIG. 12 shows the components included in the user interface of a test for the assignment of semantic annotations to parts of documents, when in "Resolution" state. The panel on the left is a document browser that allows the selection of document contents and has additional functionality described below, and the panel on the right is a filter browser or editor that specifies the way each semantic annotation is highlighted and has additional functionality described below. In the case of a filter editor, it also allows the user to add semantic annotations that can be associated to parts of the document on the left and ways to highlight them.

When in "Resolution" state, the left click event in the component that shows semantic annotations selects a semantic annotation. The dragging event in the document editor assigns the selected semantic annotation with an additional attribute "author → student" to the part of the document selected by the event.

The filter that is enabled initially on the document editor when the test is in "Resolution" state is the one represented by the component that shows semantic annotations, with an additional filtering unit that highlights in a predetermined colour parts associated to more than one semantic annotation.

FIG. 13 shows the components included in the user interface when grading a test for the assignment of semantic annotations to parts of documents, while in "Grading" state. The panel on the left is a document browser that has additional functionality described below, and the panel on the right is a filter browser that specifies the way each semantic annotation is highlighted.

The filter that is enabled initially on the document browser when the test is in "Grading" state highlights in one fixed colour the parts of the document that are associated to two semantic annotations that differ only by the fact that one of them has an additional attribute "author → student". It highlights in a different colour the parts associated to a semantic annotation without this attribute that do not overlap any part associated to a semantic annotation with this attribute. Finally, it highlights in a third colour the parts associated to a semantic annotation with an attribute of the form "author → student" that are not associated to a semantic annotation that differs from the previous one only by that attribute.

The components included in the user interface when solving a test for the assignment of semantic annotations to parts of documents, while in "Answers" and "Original" states, are the same ones as in the previous paragraph.

The semantic actions that correspond to the buttons and contextual menus available in the "Grading", "Answers", and "Original" states are the actions described in paragraph [17300].

The filters that are enabled initially on the document editor when the test is in the "Answers" and "Original" states are described in paragraphs [17200] and [17300] respectively.

The contextual menus described in paragraph [17300] are available according to semantic acceptance conditions. For example, the contextual menus described there that allow students to show the original semantic annotations of the parts next to them instead of the grading can be applied only when the cursor is in a part associated to a semantic annotation that does not have an attribute of the form "author → student". The semantic conditions for the availability of the remaining two contextual menus from paragraph [17300] are similar to the previous one.

### X. Tests with mislaid parts (Design)

### a. User functionality

Tests with mislaid parts can be designed by editing or importing documents, selecting parts of them, and dragging them to different positions in the document. After this, the part that has been moved is highlighted.

Once a part has been moved within the document, it can be modified in several ways. This can be done by means of a contextual menu, which is available when the cursor is on such a part. The following actions can be executed: a) The part can be moved back to its initial position. b) The part can be shown at its initial position, without changing its position in the test to be delivered. c) A link to an explanation related to the alternative can also be added. d) In case a link has been attached to a part, it can be removed and its target document can be shown. e) The default value assigned to the part when grading the test can be modified, and the part of the document that is accepted when the student marks the alternative part can be enlarged. Once the documents are ready, they can be saved.

### b. Test design program structure

Tests with mislaid parts can be in two different states during their design. When in "Design" state, the design can go on. When in "Part relocation emulation" state, the tests behave as a test for the relocation of parts of documents. In this section we shall describe the behaviour of the tests in "Design" state; their behaviour in "Part relocation emulation" state is identical to the behaviour of the corresponding emulated test.

The components included in the user interface when designing a test with mislaid parts while in "Design" state are the same ones as in the design of a test with alternatives, described in paragraphs [11900]. The document editor has specific functionality described below.

The filter that is enabled initially on the document editor when in "Design" state highlights the parts of the document that match the semantic pattern "Moved(...)".

When in "Design" state, if a non empty part of the document is selected, the dragging event in the document editor moves the selected part and associates it to the semantic annotation "Moved(Position → xx)", where "xx" is a reference to the initial position of the part. The dragging event has a semantic acceptance condition: the selection (which can not be empty) can not overlap any part of the document that matches the semantic pattern "Moved(... )".

### XI. Tests that ask students to reorder parts of documents (Solving)

### a. User functionality

Tests for the relocation of parts of documents can be solved by users by selecting parts of the documents and dragging them to a different part of them. This is done in a way similar to the specification of a test with mislaid parts described in the previous section.

After solving a test, students can restart their work by clicking on a button, and they can ask for test grading by clicking on another button. Then, the parts that have been moved by the student are highlighted in a fixed colour if they have been moved adequately, and they are highlighted in a different colour if they should have been moved to a different position. Otherwise, they are highlighted in a third colour. Moreover, the parts that should have been moved but have stayed in the place where they were are highlighted in a fourth colour.

While grading a test, students can ask for four kinds of additional feedback, that allow them to see the parts of the document he should have moved either at the position they should have been moved to, or at their position when he started to solve the test, or the parts the student believed they had to be relocated, either at the positions where they were relocated by him or at the positions they were when the resolution of the test started. This can be done by clicking on buttons.

When the test is in any of the five situations described in paragraphs [20100] and [20200], students can bring up contextual menus associated to parts of the document that are highlighted. These contextual menus allow students to ask the system to show a different kind of information about the highlighted part the menu is attached to. The choices available to students are the ones described in those paragraphs: In the case of parts that are at a position where the student has moved them and they are highlighted because of that, he can ask for the parts to be shown and highlighted in a different colour at their position at the beginning of the resolution of the test. The case just described incluse the possibility that the corresponding moves are being graded. Conversely, if the parts are shown at the position they were at the beginning of the resolution of the test, and they are highlighted because they have been moved, the student can ask for them to be shown and highlighted in a different colour at the place where he has moved them. In the first case, the student can also ask for the grading that corresponds to each of those specific parts, which are highlighted then in three different colours with the criteria described in paragraph [20100]. The possibilities offered by the contextual menu when the parts that should have been moved are highlighted, both when they are in their original positions when the resolution of the test started and when they are at the positions they should have been moved to are anaologous to the previous ones.

### b. Test solving program structure

A test for the relocation of parts of documents passes through the states "Resolution", "Grading", "Answers", "Answers initial", "Correct" and "Correct initial" while being solved. Paragraphs [20000], [20100], [20200] and [20300] above describe the behaviour of the system when in these states.

The components included in the user interface of a test for the relocation of parts of documents, when in "Resolution" state, are the same ones as in a test for the detection of parts of documents, described in paragraph [12600], except that the component that shows the document has some editing functionality that is executed when a dragging event takes place, as explained below.

When in "Resolution" state, a copy of the original document is made in order to make comparisons with the changes made by the student. One copy is hidden and the edition actions of the student do not affect it. The second copy initially has no parts associated to semantic annotations and is displayed in the document editor.

When in "Resolution" state, if a non empty part of the document is selected, the dragging event in the document editor moves the selected part and associates it to the semantic annotation "Moved(Position → yy)", where yy denotes the original position. The dragging event has a semantic acceptance condition: the selection can not overlap any part of the document that is associated to a semantic annotation that matches the semantic pattern "Moved(...)", neither can it contain the position indicated in the attribute "Position" of any part that is associated to a semantic annotation that matches that pattern, and the final position can not be inside any part of the document that is associated to a semantic annotation that matches the same pattern.

The filter that is enabled initially on the document editor when the test is in "Resolution" state highlights in a fixed colour the parts that are associated to a semantic annotation that matches the semantic pattern "Moved(...)".

The components included in the user interface when solving a test for the relocation of parts of documents, while in "Grading", "Answers", "Answers initial", "Correct" and "Correct initial" states, are the same ones as a test with alternatives, described in paragraphs [12700] and [12750].

When the test passes to the "Grading" state, before activating the corresponding initial filter, the system builds a new grading copy of the first document. It relocates in this copy the parts that are associated to a semantic annotation that matches the pattern "Moved(Position → ...)", by locating them in the position referred by the attribute "Position" in the initial part, and it associates them to the semantic annotation "MovedTo(Position → xx)", where xx is a reference to the position where the part was located initially. Moreover, for each part of the second document, used in the resolution of the test, that is associated to a semantic annotation that matches the pattern "Moved(Position → ...)", it associates the part of the grading copy that starts at the position referred by the attribute "Position" of that semantic annotation and has the same length to the semantic annotation "MovedStudentTo(Position → xx)", where xx is the position of the part under consideration. Moreover, for each part in the grading copy of the document that is associated to a semantic annotation that matches the semantic pattern "MovedTo(Position → ...)" which does not overlap any part that is associated to a semantic annotation that matches the semantic pattern "MovedStudentTo(Position → ...)", the corresponding part of the second copy used during the resolution of the test is associated to the semantic annotation "NotMoved".

When the test passes to the states "Answers initial" and "Correct initial", the document editor shows the grading copy of the document. When it passes to the states "Grading", "Answers" and "Correct", it shows the second copy of the document used during the resolution of the test.

The filter that is enabled initially on the document editor when the test is in "Grading" state highlights in one colour the parts of the document that are associated to a semantic annotation that matches the semantic pattern "Moved(Position → ...)" and appear in the same position in the first copy of the document, where they are associated to the same semantic annotation. The filter highlights in a different colour the parts of the document that are associated to a semantic annotation that matches the semantic pattern "Moved(Position → ...)" and appear in a different position in the first document, where they are associated to the same semantic annotation. The filter highlights in a third colour the parts of the document that are associated to a semantic annotation that matches the semantic pattern "Moved (Position → ...)" and do not appear in the first copy of the document associated to the same semantic annotation. Finally, the filter highlights in a fourth colour the parts of the document that are associated to the semantic annotation "NotMoved". In this way, the behaviour described in paragraph [20100] is achieved.

The semantic actions that correspond to the buttons available in the "Grading", "Answers", "Answers initial", "Correct" and "Correct initial" states are the actions described in paragraph [20200].

The filters that are enabled initially on the document browser when the test is in the "Answers", "Answers initial", "Correct" and "Correct initial" states are described in paragraph [20200].

Similarly to paragraph [12800], the contextual menus described in paragraph [20300] are available according to the corresponding semantic acceptance conditions.

## Claims

1. A computer based testing system comprising:
- a system for designing a computerized test;
- a system for delivering said computerized test to a plurality of test users;
- a system for solving said computerized test in electronical terminals;
**characterized in that**:
- said computerized test is based on documents (10);
- said system for designing a computerized test includes means for associating semantic annotations (14) to parts of documents (10) and/or groups of parts of documents for making questions regarding the document content;
- said system for solving a said computerized test includes means for grading the answers of the users and allowing the evaluations of the results to the test users;
- said computerized test includes an interface that predetermines the actions available to test designers and test users in predetermined states of the computerized test.

2. The system of claim 1 wherein the components of said interface include document editors (1210), filter editors (1220), semantic annotation editors (1220), contextual menus (560), menus (1230), labels (540), and buttons (1240).

3. The system of claim 1 wherein:
- the semantic annotations associated to parts (410) of documents refer to single alternatives to them;
- the questions regarding the document content refer to the detection of parts of the document with single alternatives;
- the questions must be answered selecting parts (510, 520, 530) of the documents.

4. The system of claim 1 wherein:
- the semantic annotations associated to parts (810) of documents refer to multiple alternatives to them;
- the questions regarding the document content refer to the detection of parts of the document with multiple alternatives;
- the questions must be answered selecting parts of the documents and/or associated semantic annotations (910).

5. The system of claim 1 wherein:
- the semantic annotations associated to parts of documents refer to multiple alternatives to them;
- the questions regarding the document content refer to the detection of parts of the document with multiple alternatives
- the questions must be answered modifying and substituting the selected parts by an alternative part.

6. The system of claim 1 wherein:
- the questions regarding the document content refer to the assignment of semantic annotations among a list of them to parts (1110) of documents;
- the questions must be answered selecting a part (1110) of a document and the assigned semantic annotation;
- said list of semantic annotations that can be assigned to parts of documents can be modified while answering to the test.

7. The system of claim 1 wherein:
- the semantic annotations associated to parts of the document refer to misplacements,
- the questions regarding the document content refer to the relocation of the misplaced parts
- the questions must be answered moving the selected parts to another location.

8. The system of claim 1 wherein the system for delivering said computerized test to a plurality of test users includes a test server connected to the INTERNET.

9. The system of claim 1 wherein the electronical terminals for solving said computerized test is one of the following: a personal computer, a PDA, a mobile phone.

10. A method of computer based testing, comprising the steps of:
- designing a computerized test;
- delivering said computerized test to a plurality of test users;
- solving said computerized test in an electronic terminal;
**characterized in that**:
- said computerized test is based on documents (10);
- the designing of said computerized test includes associating semantic annotations (14) to parts of documents (10) and/or groups of parts of documents for making questions regarding the document content;
- the solving of said computerized test includes grading the answers of the users and allowing the evaluations of the results to the test users;
- the designing and solving steps include the use of an interface that predetermines the actions available to test designers and test users in predetermined states of the computerized test.

11. The method of claim 10 wherein the components of said interface include document editors (1210), filter editors (1220), semantic annotation editors (1220), contextual menus (560), menus (1230), labels (540), and buttons (1240).

12. The method of claim 10 wherein:
- the semantic annotations associated to parts (410) of documents refer to single alternatives to them;
- the questions regarding the document content refer to the detection of parts of the document with single alternatives;
- the questions must be answered selecting parts (510, 520, 530) of the documents.

13. The method of claim 10 wherein:
- the semantic annotations associated to parts (810) of document refer to multiple alternatives to them;
- the questions regarding the document content refer to the detection of parts of the document with multiple alternatives;
- the questions must be answered selecting parts of the documents and/or associated semantic annotations (910).

14. The method of claim 10 wherein:
- the semantic annotations associated to parts of documents refer to multiple alternatives to them;
- the questions regarding the document content refer to the detection of parts of the document with multiple alternatives
- the questions must be answered modifying and substituting the selected parts by an alternative part.

15. The method of claim 10 wherein:
- the questions regarding the document content refer to the assignment of semantic annotations among a list of them to parts (1110) of documents;
- the questions must be answered selecting a part (1110) of a document and the assigned semantic annotation;
- said list of semantic annotations that can be assigned to parts of documents car be modified while answering to the test.

16. The method of claim 10 wherein:
- the semantic annotations associated to parts of the document refer to misplacements,
- the questions regarding the document content refer to the relocation of the misplaced parts
- the questions must be answered moving the selected parts to another location.

17. A computer program comprising program instructions which, when loaded in a computer, allow the designing of a computerized test according to claim 10.

18. A computer program comprising program instructions which, when loaded in a computer, allow the solving of a computerized test according to claim 10.
